# EUROPÄISCHE PATENTANMELDUNG

(11) **EP 4 039 526 A1**
(43) Veröffentlichungstag der Anmeldung: **10.08.2022**
(21) Anmeldenummer: 22154776.3
(22) Anmeldetag: 02.02.2022
(51) Int. Cl.: B60L 53/10, B60L 53/14, B60L 53/30, B60L 53/62, B60L 53/65, B60L 58/12

(54) **MESSEINHEIT FÜR EINE LADESTATION FÜR EIN ELEKTROFAHRZEUG, LADESTATION UND VERFAHREN ZUM BETRIEB EINER LADESTATION**

(30) Priorität: 02.02.2021 DE 102021102329
(71) Anmelder: alpitronic GmbH, 39100 Bozen (IT)
(72) Erfinder: Auckenthaler, Markus, 39040 Feldthurns (IT); Hörter, Marko, 39100 Bolzano (IT); Kaneppele, Alex, 39040 Tramin (IT); Senoner, Philipp, 39048 Wolkenstein Gröden (IT)
(74) Vertreter: Charrier Rapp & Liebau

(57) **Zusammenfassung**

Die Erfindung betrifft eine Messeinheit (18) für eine Ladestation (1) für ein Elektrofahrzeug und löst die Aufgabe, eine einfache, kostengünstige und dennoch eichrechtskonforme Ausgestaltung der Messeinrichtung und der Ladestation (1) zu erlauben, durch die Messeinheit mit einer Messeinrichtung zum Messen der über einen Ladestrang (3, 3') zwischen Ladestation (1) und Elektrofahrzeug übertragenen elektrischen Energie und Erzeugen mindestens eines Messsignals hierfür, einer mit der Messeinrichtung über eine Messsignalleitung zum Übertragen des Messsignals verbundenen Messrecheneinheit, wobei die Messrecheneinheit über eine Grafiksignalleitung mit einem Laderegler der Ladestation (1) zum Empfangen eines vom Laderegler bereitgestellten Betriebsanzeigesignals verbindbar ist, wobei die Messrecheneinheit eingerichtet ist, um aus dem Messsignal und dem Betriebsanzeigesignal ein kombiniertes Anzeigesignal zur Anzeige an einer mit der Messeinheit über eine Messanzeigesignalleitung verbindbare Anzeigeeinheit (5) umzuwandeln, wobei das Messsignal in dem kombinierten Anzeigesignal in einem dedizierten Anzeigebereich angeordnet ist. Die Erfindung betrifft weiter eine Ladestation (1) mit solch einer Messeinheit sowie ein Verfahren zum Betrieb der Ladestation (1).

## Beschreibung

Die Erfindung betrifft eine Messeinheit für eine Ladestation für ein Elektrofahrzeug, insbesondere Straßenfahrzeug, nach Anspruch 1, eine Ladestation für ein Elektrofahrzeug nach Anspruch 7 sowie ein Verfahren zum Betrieb einer solchen Ladestation nach dem Oberbegriff des Anspruchs 9.

Die DE 10 2018 209 168 A1 offenbart Lade-Schnittstelleneinheit für ein Fahrzeug, das einen elektrischen Energiespeicher aufweist. Die Lade-Schnittstelleneinheit umfasst eine Lade-Schnittstelle, die ausgebildet ist, eine elektrisch leitende Steckverbindung mit einer Lade-Schnittstelle eines Ladekabels zu bilden, um bei einem Ladevorgang elektrische Energie zum Laden des Energiespeichers bereitzustellen. Außerdem umfasst die Lade-Schnittstelleneinheit einen Projektor, der eingerichtet ist, eine bildliche Anzeige zu projizieren, wobei die Anzeige Ladeinformationen in Bezug auf einen Ladevorgang umfasst. Diese Anzeige kann zwar die Ladeinformationen anzeigen, jedoch hat der Benutzer hier keine Gewähr, ob die angezeigten Informationen auch exakt sind. Dies mag bei einer Ladestation in einem einzelnen Haus noch akzeptabel sein, da der Hausbewohner die Kosten für den zum Laden des Fahrzeugs verwendeten elektrischen Strom ohnehin über die übliche Stromrechnung bezahlen muss. Aber bereits in einem Mehrparteienhaus, in Mietshäusern oder auch an öffentlich zugänglichen Elektrofahrzeug-Ladestationen ist dies nicht mehr möglich.

Die DE 10 2014 214 613 A1 offenbart ein Verfahren zum Laden eines Energiespeichers eines Fahrzeugs, insbesondere eines Elektrofahrzeugs, umfassend Koppeln eines Fahrzeugs und eine Ladestation zum Laden eines Energiespeichers des Fahrzeugs, Erfassen einer Kennung zur Identifizierung eines Nutzers, Austauschen von Daten zwischen dem Nutzer der Ladestation und einer Steuereinheit über eine Datenkommunikationseinrichtung, wobei dem Nutzer Serviceleistungen und/oder Vergünstigungen angeboten werden, die dem Nutzer nach Akzeptieren von Bedingungen zur Verfügung gestellt werden.

Die DE 10 2013 000 273 A1 offenbart eine Vorrichtung zum Anzeigen einer Information auf einer Anzeigeeinrichtung einer fahrrelevanten Verarbeitungseinheit in einem Fahrzeug. Die Vorrichtung weist eine zentrale Verarbeitungseinheit zum Erzeugen von ersten Bilddaten, eine die Anzeigeeinrichtung aufweisende fahrrelevante Verarbeitungseinheit zum Erzeugen von zweiten Bilddaten für die Anzeigeeinrichtung, eine mit einem Grafikausgang der zentralen Verarbeitungseinheit und einem Grafikeingang der fahrrelevanten Verarbeitungseinheit gekoppelte Bilddatenleitung zum Übertragen der ersten Bilddaten von der zentralen Verarbeitungseinheit zu der fahrrelevanten Verarbeitungseinheit auf. Die fahrrelevante Verarbeitungseinheit erzeugt aus den ersten Bilddaten und den zweiten Bilddaten ein Inhalte der ersten Bilddaten und Inhalte der zweiten Bilddaten aufweisendes Überlagerungsbild und die Anzeigeeinrichtung zeigt das Überlagerungsbild an. Ebenso wird ein entsprechendes Verfahren offenbart.

Um es den Benutzern derartiger Ladestationen zu ermöglichen, die beim elektrischen Laden bezogene Strommenge auch zu kontrollieren und sich auf die Anzeige der bezogenen Strommenge verlassen zu können, hat der Gesetzgeber, beispielsweise in Deutschland, im Rahmen des Eichrechts umfangreiche Vorgaben gemacht, u.a. dass die Messeinrichtungen für den Ladestrom geeicht sind und die abgegebene Strommenge bzw. elektrische Energie selbst anzeigen können. Da die Messeinrichtungen nach den Eichvorschriften nicht manipulierbar sein dürfen, müssen ihre sämtlichen Teile gegenüber äußeren Eingriffen geschützt sein. Dies erfordert in der Regel eine vollständige räumliche und funktionale Trennung der Messeinrichtung von weiteren Anlagenteilen, lediglich die zur Messwerterfassung notwendigen Kopplungen und Anbindungen mit den die Messgrößen liefernden Teilen sowie rückwirkungsfreie Schnittstellen nach außen sind erlaubt. Auch müssen die Messeinrichtungen immer wieder nachgeeicht werden, so dass sie trotz der Kapselung von außen zugänglich und ggf. auch austauschbar sein müssen. Dies erhöht den Aufwand und benötigt zusätzlichen Bauraum in den Ladestationen und beispielsweise auch ein zusätzliches Sichtfeld in den Ladestationen für die geeichte Anzeige der Messeinrichtung.

Aufgabe der Erfindung ist es deshalb, eine Messeinheit für eine Ladestation für ein Elektrofahrzeug, eine Ladestation sowie ein Verfahren zum Betrieb einer solchen Ladestation bereitzustellen, welche die oben genannten Nachteile überwinden und eine einfache, kostengünstige und dennoch eichrechtskonforme Ausgestaltung der Messeinrichtung und der Ladestation erlauben.

Die Erfindung löst die Aufgabe durch eine Messeinheit für eine Ladestation für ein Elektrofahrzeug mit den Merkmalen des Anspruchs 1, eine Ladestation für ein Elektrofahrzeug mit den Merkmalen des Anspruchs 7 sowie ein Verfahren zum Betrieb einer solchen Ladestation mit den Merkmalen des Anspruchs 9. Vorteilhafte Weiterbildungen und Ausgestaltungen der Erfindung sind in den Unteransprüchen angegeben.

Die eingangs genannte Messeinheit für eine Ladestation für ein Elektrofahrzeug ist ausgestattet mit einer Messeinrichtung zum Messen der über einen Ladestrang zwischen Ladestation und Elektrofahrzeug übertragenen elektrischen Energie und Erzeugen mindestens eines Messsignals hierfür, einer mit der Messeinrichtung über eine Messsignalleitung zum Übertragen des Messsignals verbundenen Messrecheneinheit, wobei die Messrecheneinheit über eine Grafiksignalleitung mit einem Laderegler der Ladestation zum Empfangen eines vom Laderegler bereitgestellten Betriebsanzeigesignals verbindbar ist, die Messrecheneinheit ist eingerichtet, um aus dem Messsignal und dem Betriebsanzeigesignal ein kombiniertes Anzeigesignal zur Anzeige an einer mit der Messeinheit über eine Messanzeigesignalleitung verbindbare Anzeigeeinheit umzuwandeln, wobei das Messsignal in dem kombinierten Anzeigesignal in einem dedizierten Anzeigebereich angeordnet ist.

Dabei kann das Betriebsanzeigesignal bevorzugt in dem kombinierten Anzeigesignal in einem von dem dedizierten Anzeigebereich unterschiedlichen Anzeigebereich angeordnet sein. Alternativ kann das Betriebsanzeigesignal in dem kombinierten Anzeigesignal von dem dedizierten Anzeigebereich überschrieben werden, so dass also keine Abstimmung des dedizierten Anzeigebereichs für das Messsignal mit dem Anzeigebereich für das Betriebsanzeigesignal erfolgen muss.

Vorteilhaft kann die Messeinrichtung eine Signatureinheit zum digitalen Signieren des Messsignals aufweisen, um das Messsignal signiert und somit gegen unerwünschtes auslesen und ändern gesichert an die weiteren Teile der Messeinheit oder der Ladestation weiterleiten zu können.

Bevorzugt kann das Betriebsanzeigesignal ein Grafiksignal mit einem vorgegebenen Grafiksignalformat sein, wobei vorteilhaft das kombinierte Anzeigesignal ein Grafiksignal mit demselben Grafiksignalformat wie das Betriebsanzeigesignal ist. Das Betriebsanzeigesignal muss dann nicht in ein weiteres Grafiksignalformat umgewandelt werden.

Weiter kann die Messeinheit vorteilhaft eine erste Grafiksignalwandlereinheit aufweisen, um das Betriebsanzeigesignal in ein in der Messrecheneinheit vorgegebenes Grafiksignalformat umzuwandeln. Bevorzugt kann die Messeinheit eine zweite Grafiksignalwandlereinheit aufweisen, um das Grafiksignalformat des kombinierten Anzeigesignals in von der Anzeigeeinheit vorgegebenes Grafiksignalformat umzuwandeln.

Bevorzugt kann die Messeinheit einen Anschluss zum Verbinden des Ladereglers mit der Messsignalleitung aufweisen.

Die eingangs genannte Ladestation für ein Elektrofahrzeug weist mindestens einen mit dem Elektrofahrzeug konduktiv verbindbaren Ladestrang zum Übertragen elektrischer Energie zwischen Ladestation und Elektrofahrzeug auf, die Ladestation umfasst einen Laderegler, eine Anzeigeeinheit und mindestens eine Messeinheit mit einer Messeinrichtung zum Messen der über den Ladestrang zwischen Ladestation und Elektrofahrzeug übertragenen elektrischen Energie und zum Erzeugen mindestens eines Messsignals hierfür, und mit einer mit der Messeinrichtung über eine Messsignalleitung zum Übertragen des Messsignals verbundenen Messrecheneinheit, wobei die Messrecheneinheit über eine Grafiksignalleitung mit dem Laderegler der Ladestation zum Empfangen eines vom Laderegler bereitgestellten Betriebsanzeigesignals verbunden ist, wobei die Messrecheneinheit eingerichtet ist, um aus dem Messsignal und dem Betriebsanzeigesignal ein kombiniertes Anzeigesignal zur Anzeige an der mit der Messeinheit über eine Messanzeigesignalleitung verbundenen Anzeigeeinheit zu erzeugen, wobei das Messsignal in dem kombinierten Anzeigesignal in einem dedizierten Anzeigebereich angeordnet ist.

Bevorzugt kann die Messeinheit dabei wie oben und nachfolgend beschrieben ausgebildet sein. Die Verwendung einer solchen Messeinheit mit einer Ladestation ermöglicht eine vorteilhafte Ausnutzung der Vorteile der Messeinheit und einen verbesserten Betrieb der Ladestation.

Ein eingangs genanntes Verfahren zum Betrieb einer oben und nachfolgend beschriebenen Ladestation ist erfindungsgemäß gekennzeichnet durch die Schritte:
a) Messen der über einen Ladestrang zwischen Ladestation und Elektrofahrzeug übertragenen elektrischen Energie und Erzeugen mindestens eines Messsignals hierfür,
b) Übertragen des Messsignals über eine Messsignalleitung an die Messrecheneinheit und eines Betriebsanzeigesignals vom Laderegler über eine Grafiksignalleitung an die Messrecheneinheit,
c) Erzeugen eines kombinierten Anzeigesignals aus dem Messsignal und dem Betriebsanzeigesignal, wobei das Messsignal in dem kombinierten Anzeigesignal in einem dedizierten Anzeigebereich dargestellt wird,
d) Übertragen des kombinierten Anzeigesignals über die Messanzeigesignalleitung an die Anzeigeeinheit.

Bevorzugt kann das Betriebsanzeigesignal in dem kombinierten Anzeigesignal in einem von dem dedizierten Anzeigebereich unterschiedlichen Anzeigebereich dargestellt werden. Dabei kann vorteilhaft das Betriebsanzeigesignal in dem kombinierten Anzeigesignal von dem dedizierten Anzeigebereich überschrieben werden. Bevorzugt kann das Messsignal digital signiert werden.

Weiter kann bevorzugt vor Schritt c) das Betriebsanzeigesignal in ein von der Messrecheneinheit vorgegebenes Grafiksignalformat umgewandelt wird. Alternativ kann bevorzugt in Schritt c) aus dem Messsignal ein Grafiksignal mit dem Grafiksignalformat des Betriebsanzeigesignals erzeugt werden, wobei weiter bevorzugt das aus dem Messsignal erzeugte Grafiksignal dem Betriebsanzeigesignal überlagert werden kann und dabei der dem dedizierten Anzeigebereich entsprechende Bereich des Betriebsanzeigesignals von dem aus dem Messsignal erzeugten Grafiksignal überschrieben werden kann.

Weiter kann vorteilhaft in Schritt c) das kombinierte Anzeigesignal in einem durch die Anzeigeeinheit vorgegebenen Grafiksignalformat erzeugt werden. Auch kann bevorzugt vor Schritt d) das kombinierte Anzeigesignal in ein durch die Anzeigeeinheit vorgegebenes Grafiksignalformat umgewandelt werden.

Die Erfindung wird nachfolgend anhand eines detaillierten Ausführungsbeispiels mit Bezug auf die begleitenden Zeichnungen beschrieben. Diese zeigen:
- **Fig. 1**: eine schematische, dreidimensionale Ansicht einer erfindungsgemäßen Ladestation;
- **Fig.** 2: ein schematisches Funktionsdiagramm der Ladestation aus Fig. 1;
- Fig. 3: die kombinierte Anzeige für Betriebs- und Messsignale aus Fig. 1 und 2;
- Fig. 4: eine Detailansicht einer in Fig. 3 gezeigten Ladezustandsanzeige
- Fig. 5: eine erste Detailansicht einer alternativen Ladezustandsanzeige;
- Fig. 6: eine zweite Detailansicht einer alternativen Ladezustandsanzeige.

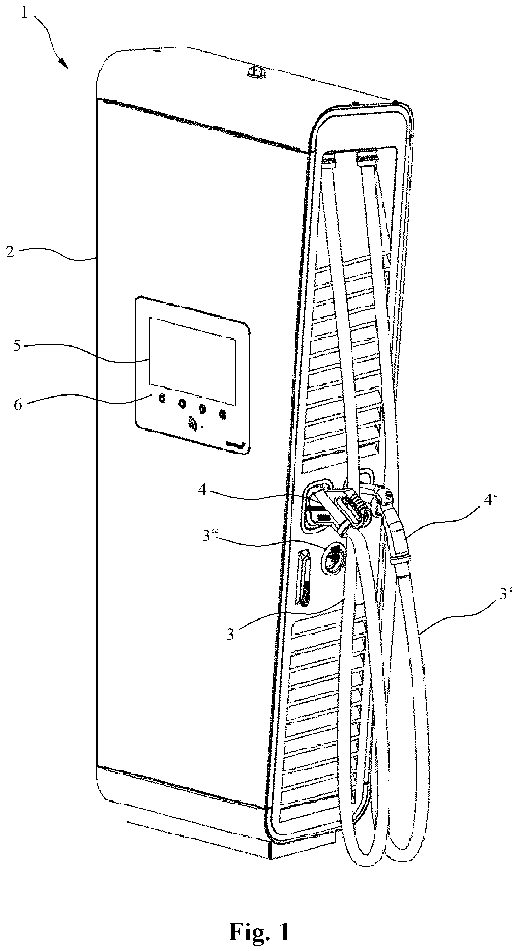

Fig. 1 zeigt eine erfindungsgemäße Ladestation 1 für elektrische Fahrzeuge, insbesondere elektrische Kraft- oder Lastkraftfahrzeuge mit einem Gehäuse 2, die Ladestation 1 wird üblicherweise auch Ladeinrichtung genannt. An dem Gehäuse 2 ist ein erstes Ladekabel 3 als außerhalb des Gehäuses 2 sichtbarer Teil eines ersten elektrischen Ladestrangs, auch Ladepunkt genannt, angeordnet. Das Ladekabel 3 weist an seinem freien Ende einen Handgriff 4 mit Verbindungsstecker zum Verbinden mit einem entsprechenden Gegenstück am zu ladenden Fahrzeug auf. Ein weiteres Ladekabel 3' eines zweiten elektrischen Ladestrangs ist entsprechend ausgebildet, kann aber ggf. einen anderen Verbindungsstecker aufweisen. Weiter weist das Gehäuse 2 eine von außen für den Benutzer sichtbare Anzeigeeinheit 5 mit darunter angeordneten Bedienelementen 6 auf. Ein dritter Ladestrang 3" weist im Gegensatz zu den beiden anderen Ladesträngen kein nach außerhalb des Gehäuses 2 geführtes Ladekabel auf, sondern nur einen Ladeanschluss, das zugehörige Ladekabel wird am Fahrzeug mitgeführt. Wenn im weiteren von Ladekabel 3, 3' bzw. Ladeanschluss 3" gesprochen wird, ist hiermit auch der jeweilige Ladestrang gemeint. Diese Ausgestaltung einer Ladestation 1 ist dem Fachmann an sich bekannt und braucht deshalb keine detaillierte Erläuterung.

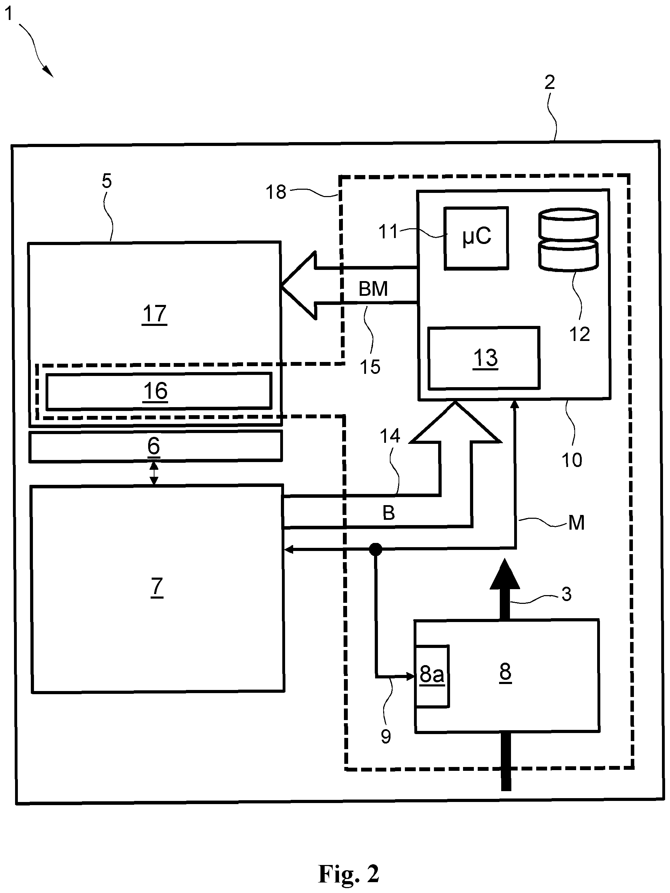

Wie aus dem Funktionsdiagramm Fig. 2 hervorgeht, weist die Ladestation einen Laderegler 7 auf, der als zentrale Steuereinheit der Ladestation 1 dient und u.a. die an den Bedienelementen 6 vom Benutzer eingestellten Ladeparameter, beispielsweise die gewünschte Ladeenergie, das erste oder das zweite Ladekabel 3 bzw. 3' bzw. den Ladeanschluss 3" und/oder die Ladezeit, in die entsprechende Ansteuerung der nicht dargestellten elektrischen Ladeeinheiten umsetzt. Gleichermaßen überwacht der Laderegler 7 sämtliche Funktionen der Ladestation 1 und gibt dem Benutzer an der Anzeigeeinheit 5 u. a. Hinweise, was er zu tun hat, wie lange der Ladevorgang unter den gewünschten Ladeparametern benötigt etc. Auch dies ist dem Fachmann grundsätzlich bekannt.

Weiter weist die Ladestation 1 zur Messung der während des Ladevorgangs über den Ladestrang 3 an das Fahrzeug übertragenen elektrischen Energie eine Messeinrichtung 8 auf. Die Messeinrichtung 8 misst dabei in an sich bekannter Weise die durch den Ladestrang 3 an das zu ladende Fahrzeug übertragene elektrische Energie und erzeugt hierzu ein Messsignal M. Sind wie in Fig. 1 gezeigt mehrere Ladestränge 3, 3' vorhanden, so kann für jeden Ladestrang 3, 3', 3" eine eigene Messeinrichtung 8 oder ggf. auch eine kombinierte Messeinrichtung für alle oder mehrere Ladestränge vorgesehen werden.

Die Messeinrichtung 8 überträgt die gemessenen Messsignale M über eine Messsignalleitung 9 zum einen an den Laderegler 7 und zum anderen an eine Messrecheneinheit 10. Ein Zugriff des Ladereglers 7 über die Messsignalleitung 9 auf die Messeinrichtung 8 ist nur im Rahmen einer sog. rückwirkungsfreien Schnittstelle möglich. Dies bedeutet, dass eine Beeinflussung oder Änderung der Messsignale M durch den Laderegler 7 auf dem Weg der Messsignale M von Messeinrichtung 8 zur Messrecheneinheit 10 nicht möglich ist. Die Messsignalleitung 9 von der Messeinrichtung 8 zum Laderegler 7 sowie zur Messrecheneinheit 10 ist somit rückwirkungsfrei ausgebildet - der Laderegler 7 kann die Messsignale M, welche er über die rückwirkungsfreie Schnittstelle von der Messeinrichtung 8 angefragt ("Anfrage") hat, aber entsprechend geordnet empfangen ("Antwort") und für sonstige Belange einsetzen, beispielsweise die Überwachung des Energieflusses zum Fahrzeug oder die Ansteuerung der internen Ladeeinheiten. Handelt es sich bei der Messsignalleitung 9 um eine Busleitung, so wird protokoll- oder programmiertechnisch und/oder kryptografisch, beispielsweise durch Signatur der Messwerte, verhindert, dass die übertragenen Messsignale M auf dem Weg von der Messeinrichtung 8 zum Laderegler 7 verändert oder anderweitig manipuliert werden können. So kann beispielsweise die Messeinrichtung 8 eine angedeutete Signatureinheit 8a aufweisen, welche die Messsignale M noch vor dem Einspeisen in die Messsignalleitung 9 digital signiert. Entsprechendes gilt auch für den Weg zwischen der Messeinrichtung 8 zur Messrecheneinheit 10, zumindest was die gemessenen Messsignale M betrifft. Auch hier kann die Messrecheneinheit 10 die gemessenen Messsignale M weder ändern oder anderweitig manipulieren.

Bevorzugt steuert dabei der Laderegler 7 sowohl die Messeinrichtung 8 als auch die Messrecheneinheit 10 an, stellt insofern also den "Master" dar, während die Messeinrichtung 8 und die Messrecheneinheit 10 als "Slave" betrieben werden. Somit kann der Laderegler 7 den Start- und Stoppzeitpunkt an die Messeinrichtung 8 und ggf. auch an die Messrecheneinheit 10 übertragen, um für einen Ladevorgang den zugehörigen und notwendigen Messvorgang zu starten. Die entsprechenden Steuerdaten können dabei über die Messsignalleitung 8 und/oder über eine eigene Steuerleitung übertragen werden, wobei in beiden Fällen sichergestellt werden muss, das dies rückwirkungsfrei geschieht, der Laderegler 7 also nicht über die Messleitung 8 und/oder die Steuerleitung die Messsignale M beeinflussen oder ändern kann.

Ggf. kann aber die auch die Messrecheneinheit 10 die Messeinrichtung 8 ansteuern, beispielsweise Zeitpunkte für das Auslesen der Messsignale M festlegen etc.

Die Messrecheneinheit 10 kann ein eigenständiger Steuerrechner sein, der in bekannter Weise einen Mikrocontroller oder Prozessor 11, einen Speicher 12, insbesondere RAM-Speicher sowie einen E/A-Baustein 13, aufweist. Ggf. kann die Messrecheneinheit 10 auch einen eigenen Grafikprozessor mit Grafikspeicher etc. aufweisen.

Die Messrecheneinheit 10 dient dazu, die gemessenen Werte der Messsignale M, insbesondere die an das Fahrzeug übertragene Energie, für die grafische Darstellung aufzubereiten und eichrechtskonform an der Anzeigeeinheit 5 anzuzeigen. Dies erfordert auch, dass sowohl die Übertragung der Messsignale M als auch deren grafische Darstellung für den Benutzer in einer eigenständigen Anzeige erfolgt, welche vollkommen unabhängig von anderen Bestandteilen der Ladestation 1, beispielsweise dem Laderegler 7, ist. Insbesondere dürfen die Messsignale M selbst wie auch deren grafische Aufbereitung und Darstellung dabei nicht durch externe Bestandteile der Ladestation 1 manipulierbar oder beinflussbar sein. Um dies auf einfachem Weg zu erreichen, ist vorgesehen, dass die Messrecheneinheit 10 über eine Grafiksignalleitung 14 von dem Laderegler 7 erzeugte Betriebsanzeigesignale B in Form von Grafiksignalen, bevorzugt im Grafiksignalformat LVDS, ggf. aber auch in anderen Grafiksignalformate wie VDA, HDMI, etc, erhält. Diese Grafiksignale können bevorzugt in dem Speicher 12 zwischengespeichert, insbesondere gepuffert werden.

In der Messrecheneinheit 10 werden dann die Messsignale M ausgewertet und für die Anzeige als Grafiksignale und ggf. Protokollierung aufbereitet. Dabei werden in der Messrecheneinheit 10 die als Grafiksignale vorliegenden Betriebsanzeigesignale B aus dem Laderegler 7 mit den als Grafiksignalen aufbereiteten Messsignalen M zu einem einzigen, grafischen kombinierten Anzeigesignal BM kombiniert, welches über eine Messanzeigesignalleitung 15 an die Anzeigeeinheit 5 weitergeleitet wird.

Dabei wird das kombinierte Anzeigesignal BM so gebildet, dass den aufbereiteten grafischen Messsignalen in der Anzeigeeinheit 5 stets ein vorgegebener, reservierter, also dedizierter Anzeigebereich zugewiesen wird, welcher dann die Ladezustandsanzeige 16 bildet. Die weiteren, vom Laderegler 7 erzeugten grafischen Betriebsanzeigesignale B werden dann in dem verbleibenden Bereich der Anzeigeeinheit 5 als Betriebsanzeige 17 angezeigt.

Bevorzugt werden die Messsignale M dabei im selben Grafiksignalformat aufbereitet wie die vom Laderegler 7 kommenden Betriebsanzeigesignale B. Ggf. können aber auch die Betriebsanzeigesignale B in das Grafiksignalformat umgewandelt werden, in welches die Messsignale M in der Messrecheneinheit 10 umgewandelt bzw. aufbereitet werden. Bevorzugt kann dabei im Laderegler 7 oder in der Messrecheneinheit 10 eine erste Grafiksignalwandlereinheit vorgesehen werden, welche ausgebildet ist, um eine Vielzahl von Grafiksignalformaten der Betriebsanzeigesignale B in das in der Messrecheneinheit 10 verwendete Grafiksignalformat umwandeln zu können.

Entsprechend kann das kombinierte Anzeigesignal BM dann in dem in der Messrecheneinheit 10 verwendeten Grafiksignalformat aufbereitet werden, oder in dem vom Laderegler 1 vorgegebenen Grafiksignalformat der Betriebsanzeigesignale B. Die Anzeigeeinheit 5 ist dann zur Anzeige dieses Grafiksignalformats eingerichtet. Ggf. kann das kombinierte Anzeigesignal BM aber auch in einem weiteren, von der verwendeten Anzeigeeinheit 5 vorgegebenem Grafiksignalformat erzeugt werden. Um eine gute Interoperabilität zu ermöglichen, kann am Ausgang der Messrecheneinheit 10 für das kombinierte Anzeigesignal BM eine weitere Grafiksignalwandlereinheit vorgesehen sein, die eingerichtet ist, um das im intern in der Messrecheneinheit 10 verwendeten Grafiksignalformat vorliegende kombinierte Anzeigesignal BM dann in ein durch die Anzeigeeinheit 5 vorgegebenes beliebiges Grafiksignalformat umzuwandeln.

Da es sich sowohl bei dem an die Messrecheneinheit 10 vom Laderegler 7 übertragenen Betriebsanzeigesignal B als auch bei dem von der Messrecheneinheit 10 an die Anzeigeeinheit 5 übertragenen kombinierten Anzeigesignal BM ausschließlich um Grafiksignale handelt, kann hierdurch keine Beeinflussung oder Manipulation der in der Messeinrichtung 8 gemessenen Messsignale M erfolgen.

Die Messrecheneinheit 10 kann auch dazu dienen, die Messsignale M für eine evtl. Protokollierung im Speicher 12 und/oder im Laderegler 7 aufzubereiten und ggf. zu speichern.

Die in Fig. 2 gestrichelt umrandeten Bestandteile der Ladestation 1 bilden somit eine insbesondere im Sinne des Eichrechts gegen äußere Zugriffe abgeschlossene Messeinheit 18, auch Messkapsel genannt. Insbesondere kann die für die Bedienung der Ladestation 1 ohnehin notwendige und vorhandene Anzeigeeinheit 5 auch als eichrechtskonforme Ladezustandsanzeige 16 für den Ladezustand des Ladevorgangs verwendet werden, ohne dass in der Messkapsel 18 eine zusätzliche Anzeige vorgesehen werden muss.

Bei der oben beschriebenen Ausführung kann einerseits die Messrecheneinheit 10 das kombinierte Anzeigesignal BM so erzeugen, dass der Bereich der Anzeigeeinheit 5, der für die Ladezustandsanzeige 16 vorgesehen ist, stets durch die in der Messrecheneinheit 10 für die grafische Anzeige aufbereiteten Messsignale überschrieben wird. Es ist dann nicht nötig, dass in dem grafischen Betriebsanzeigesignale B ein bestimmter Bereich für die Ladezustandsanzeige 16 ausgespart oder freigehalten wird. Insofern ist dann eine genaue Abstimmung der Erzeugung der grafischen Betriebsanzeigesignale B im Laderegler 7 und der für die grafische Anzeige aufbereiteten Messsignale in der Messrecheneinheit 10 nicht mehr notwendig.

Dies hat den weiteren Vorteil, dass die Gestaltung und Entwicklung oder Anpassung der Ladestation 1 unabhängig von der in der Messkapsel 18 enthaltenen Elemente und Bestandteile erfolgen kann. Lediglich die Schnittstellendefinition zwischen Laderegler 7 und Messeinrichtung 8, Laderegler 7 und Messrecheneinheit 10 sowie Messrecheneinheit 10 und Anzeigeeinheit 5 müssen berücksichtigt werden.

Alternativ kann im Laderegler 7 bereits vorgegeben werden, dass die für die Ladezustandsanzeige 16 vorgegebenen Bereiche der Anzeigeeinheit 5 stets frei zu bleiben haben, also im Laderegler 7 hierfür keine grafischen Betriebsanzeigesignale B erzeugt werden dürfen. Dies verhindert, dass u.U. für die Bedienung der Ladestation 1 notwendige Betriebsanzeigesignale B an solche Stellen der Anzeigeeinheit 5 dargestellt werden, welche später durch die in der Messrecheneinheit 10 aufbereiteten Messsignale M überschrieben würden.

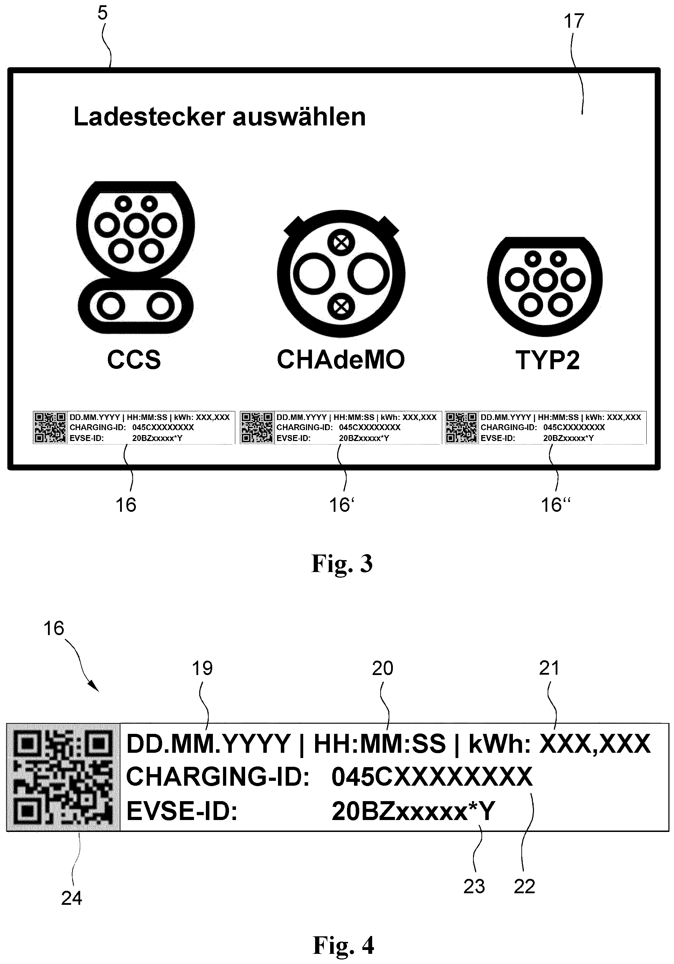

In Fig. 3 ist die Anzeigeeinheit 5 mit der kombinierten grafischen Ausgabe für das kombinierte grafische Anzeigesignal BM dargestellt. Dabei fordert die Betriebsanzeige 17 dazu auf, den für das Fahrzeug geeigneten Ladesteckertyp "CCS", "CHAdeMO" bzw. "TYP2", also den Ladestrang 3, 3' bzw. 3" auszuwählen. Die Ladezustandsanzeige 16 hingegen ist in jeweils eine eigene Ladezustandsanzeige 16, 16' bzw. 16" für jeden Steckertyp respektive Ladestrang 3, 3' bzw. 3" aufgeteilt, wobei die Ladezustandsanzeigen 16, 16' bzw. 16" jedoch identisch ausgebildet sind.

In Fig. 4 ist deshalb exemplarisch nur die Ladezustandsanzeige 16 im Detail gezeigt und beschreiben, entsprechendes gilt auch für die weiteren Ladezustandsanzeigen 16' bzw. 16".

Die Ladezustandsanzeige 16 gibt dabei zu dem aktuellen Ladevorgang das Ladedatum 19, die Ladeuhrzeit 20 und als Ladezustand 21 die übertragene Energie an. Weiter wird eine dem Ladevorgang zugeordnete Ladevorgangsidentifikation 22 angegeben, über den sich der Ladevorgang eindeutig identifizieren lässt. Entsprechend wird weiter eine der Ladestation 1 zugeordnete Ladestationsidentifikation 23 angegeben, um den Ladevorgang weitere identifizieren zu können. Letztendlich ist ein QR-Code 24 als Ladeinformationselement angegeben, der es dem Benutzer ermöglicht, beim Betreiber der Ladestation 1 alle Daten zu dem Ladevorgang anzufordern bzw. einzusehen und ggf. auch dort die Kosten für den Ladevorgang zu begleichen. Ggfs. können einige oder alle der in der Ladezustandsanzeige 16 angezeigten Werte 19 bis 23 auch in den QR-Code 24 integriert werden. Anstelle eines QR-Codes 24 können auch andere geeignete Informationsmittel, insbesondere zur einfachen und schnellen elektronischen Identifizierung durch den Benutzer, verwendet werden, beispielsweise Barcodes, Zahlencodes etc.

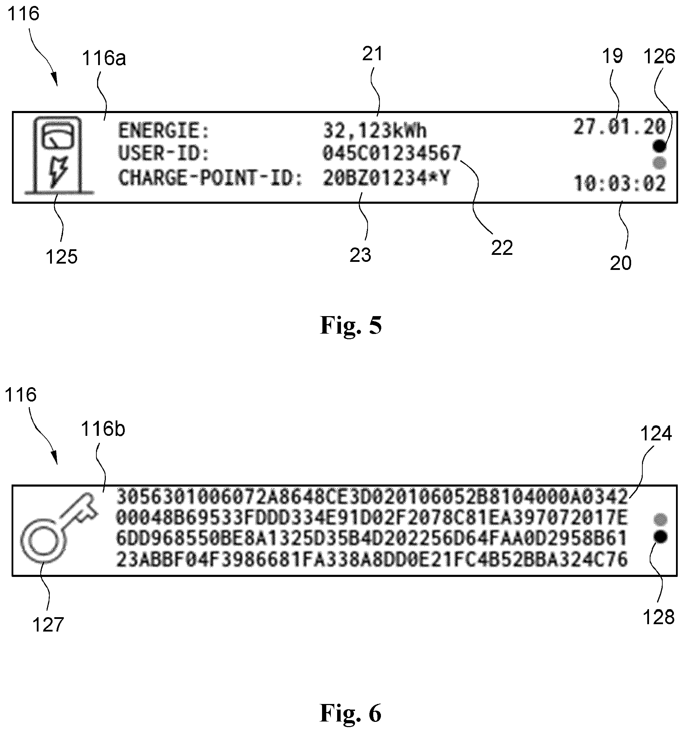

In Fig. 5 und 6 ist eine alternative Ladezustandsanzeige 116 gezeigt, wobei nachfolgend vor allem auf die Unterschiede zur Ladezustandsanzeige 16 aus Fig. 4 eingegangen werden soll. Entsprechende Elemente werden deshalb mit denselben Begriffen bezeichnet und denselben Bezugszeichen gekennzeichnet.

Anstelle der in Fig. 4 gezeigten gleichzeitigen Anzeige des QR-Codes 24 und der rechts daneben angezeigten weiteren Ladevorgangsdaten wird mit der Ladezustandsanzeige 116 abwechselnd eine in Fig. 5 gezeigte Ladeinformationsanzeige 116a und eine in Fig. 6 gezeigte Ladeidentifikationsanzeige 116b eingeblendet. Bevorzugt können die Anzeigen jeweils im Wechsel von mehreren Sekunden eingeblendet werden.

Dabei zeigt die in Fig. 5 gezeigte Ladeinformationsanzeige 116a zum einen die in Fig. 4 rechts gezeigten Ladevorgangsdaten Ladedatum 19, Ladeuhrzeit 20, Ladezustand 21, Ladevorgangsidentifikation 22 und Ladestationsidentifikation 23 an. Zudem wird links außen ein Ladeinformationsanzeige-Icon 125 und rechts außen oben ein erstes Blinkelement 126 in Form eines Punktes gezeigt.

In der in Fig. 6 gezeigten Ladeidentifikationsanzeige 116b hingegen wird zum einen anstelle des in Fig. gezeigten QR-Codes 24 als Ladeinformationselement 124 ein vierzeiliger Zahlencode angezeigt, welcher wie oben zum QR-Code 24 beschrieben die zur eindeutigen Identifikation des aktuellen Ladevorgangs notwendigen und ggf. noch weitere Daten enthält. Anstelle des vierzeiligen Zahlencodes können auch andere Codierungsarten verwendet werden. Weiter wird links außen ein Ladeidentifikationsanzeige-Icon 127 und rechts außen unten und unterhalb des ersten Blinkelements 126 ein zweites Blinkelement 128 in Form eines Punktes gezeigt.

Die alternative Ladezustandsanzeige 116 kann vorteilhaft eingesetzt werden, um in der Anzeigeeinheit 5 einen möglichst kleinen Bereich für den dedizierten Anzeigebereich der Ladezustandsanzeige 116 vorsehen zu müssen, und dennoch eine für den Benutzer gut erkennbare und mittels elektronischer Mittel wie Smartphones, Tabletts etc. einfach und sicher erfassbare Darstellung des Ladeinformationselement 24 zu erzielen. Den verbleibenden großen Bereich der Anzeigeeinheit 5 kann der Betreiber der Ladestation 1 dann für die Darstellung anderer Inhalte verwenden, beispielsweise Werbung, Wetterdaten, Verkehrsdaten etc.

### Bezugszeichen

- 1: Ladestation (EVSE)
- 2: Gehäuse
- 3, 3', 3": Ladestrang (Anschlusskabel bzw. Ladeanschluss)
- 4: Handgriff mit Stecker
- 5: Anzeigeeinheit, Bildschirm
- 6: Bedienelemente
- 7: Laderegler
- 8: Messeinrichtung
- 8a: Signatureinheit
- 9: Messsignalleitung
- 10: Messrecheneinheit
- 11: Mikrocontroller
- 12: Speicher
- 13: E/A-Baustein
- 14: Grafiksignalleitung
- 15: Messanzeigesignalleitung
- 16, 16', 16": Ladezustandsanzeigen
- 17: Betriebsanzeige
- 18: Messkapsel, gekapselte Messeinheit
- 19: Ladedatum
- 20: Ladeuhrzeit
- 21: Ladezustand (übertragene Ladeenergie)
- 22: Ladevorgangsidentifikation
- 23: Ladestationsidentifikation
- 24: Ladeinformationselement (QR-Code)
- 117: alternative Ladezustandsanzeige
- 124: alternatives Ladeinformationselement (Zahlen-Code)
- 125: Ladeinformationsanzeige-Icon
- 126: oberes erstes Blinkelement
- 127: Ladeidentifikationsanzeige-Icon
- 128: unteres zweites Blinkelement

- B: Betriebsanzeigesignal
- M: Messsignal
- BM: kombiniertes Anzeigesignal

## Patentansprüche

1. Messeinheit (18) für eine Ladestation (1) für ein Elektrofahrzeug mit einer Messeinrichtung (8) zum Messen der über einen Ladestrang (3, 3') zwischen Ladestation (1) und Elektrofahrzeug übertragenen elektrischen Energie und Erzeugen mindestens eines Messsignals (M) hierfür,
einer mit der Messeinrichtung (8) über eine Messsignalleitung (9) zum Übertragen des Messsignals (M) verbundenen Messrecheneinheit (10), wobei die Messrecheneinheit (10) über eine Grafiksignalleitung (14) mit einem Laderegler (7) der Ladestation (1) zum Empfangen eines vom Laderegler (7) bereitgestellten Betriebsanzeigesignals (B) verbindbar ist,
die Messrecheneinheit (10) ist eingerichtet, um aus dem Messsignal (M) und dem Betriebsanzeigesignal (B) ein kombiniertes Anzeigesignal (BM) zur Anzeige an einer mit der Messeinheit (18) über eine Messanzeigesignalleitung (15) verbindbare Anzeigeeinheit (5) umzuwandeln,
wobei das Messsignal (M) in dem kombinierten Anzeigesignal (BM) in einem dedizierten Anzeigebereich (16) angeordnet ist.

2. Messeinheit (18) nach Anspruch 1, **dadurch gekennzeichnet, dass** das Betriebsanzeigesignal (B) in dem kombinierten Anzeigesignal (BM) in einem von dem dedizierten Anzeigebereich (16) unterschiedlichen Anzeigebereich (17) angeordnet ist, oder dass das Betriebsanzeigesignal (B) in dem kombinierten Anzeigesignal (BM) von dem dedizierten Anzeigebereich (16) überschrieben wird.

3. Messeinheit (18) nach einem der voranstehenden Ansprüche, **dadurch gekennzeichnet, dass** die Messeinrichtung (8) eine Signatureinheit (8a) zum digitalen Signieren des Messsignals (M) aufweist, und/oder dass die Messeinheit (18) einen Anschluss zum Verbinden des Ladereglers (7) mit der Messsignalleitung (9) aufweist.

4. Messeinheit (18) nach einem der voranstehenden Ansprüche, **dadurch gekennzeichnet, dass** das Betriebsanzeigesignal (B) ein Grafiksignal mit einem vorgegebenen Grafiksignalformat ist.

5. Messeinheit (18) nach Anspruch 4, **dadurch gekennzeichnet, dass** das kombinierte Anzeigesignal (BM) ein Grafiksignal mit demselben Grafiksignalformat wie das Betriebsanzeigesignal (B) ist.

6. Messeinheit (18) nach einem der voranstehenden Ansprüche, **dadurch gekennzeichnet, dass** die Messeinheit (18) eine erste Grafiksignalwandlereinheit aufweist, um das Betriebsanzeigesignal (B) in ein von der Messrecheneinheit (10) vorgegebenes Grafiksignalformat umzuwandeln, und/oder dass die Messeinheit (18) eine zweite Grafiksignalwandlereinheit aufweist, um das Grafiksignalformat des kombinierten Anzeigesignals (BM) in ein durch die Anzeigeeinheit (5) vorgegebenes Grafiksignalformat umzuwandeln.

7. Ladestation (1) für ein Elektrofahrzeug mit mindestens einem mit dem Elektrofahrzeug konduktiv verbindbaren Ladestrang (3, 3') zum Übertragen elektrischer Energie zwischen Ladestation (1) und Elektrofahrzeug, die Ladestation (1) umfasst einen Laderegler (7), eine Anzeigeeinheit (5) und mindestens eine Messeinheit (18) mit einer Messeinrichtung (8) zum Messen der über den Ladestrang (3, 3') zwischen Ladestation (1) und Elektrofahrzeug übertragenen elektrischen Energie und Erzeugen mindestens eines Messsignals (M) hierfür, und mit einer mit der Messeinrichtung (8) über eine Messsignalleitung (9) zum Übertragen des Messsignals (M) verbundenen Messrecheneinheit (10), wobei die Messrecheneinheit (10) über eine Grafiksignalleitung (14) mit dem Laderegler (7) der Ladestation (1) zum Empfangen eines vom Laderegler (7) bereitgestellten Betriebsanzeigesignals (B) verbunden ist, wobei die Messrecheneinheit (10) eingerichtet ist, um aus dem Messsignal (M) und dem Betriebsanzeigesignal (B) ein kombiniertes Anzeigesignal (BM) zur Anzeige an der mit der Messeinheit (18) über eine Messanzeigesignalleitung (15) verbundenen Anzeigeeinheit (5) zu erzeugen, wobei das Messsignal (M) in dem kombinierten Anzeigesignal (BM) in einem dedizierten Anzeigebereich (16) angeordnet ist.

8. Ladestation (1) nach Anspruch 7, **dadurch gekennzeichnet, dass** die Messeinheit (18) nach einem der Ansprüche 1 bis 6 ausgebildet ist.

9. Verfahren zum Betrieb einer Ladestation (1) nach einem der Ansprüche 7 oder 8, **gekennzeichnet durch** die Schritte:
a) Messen der über einen Ladestrang (3, 3') zwischen Ladestation (1) und Elektrofahrzeug übertragenen elektrischen Energie und Erzeugen mindestens eines Messsignals (M) hierfür,
b) Übertragen des Messsignals (M) über eine Messsignalleitung (9) an die Messrecheneinheit (10) und eines Betriebsanzeigesignals (B) vom Laderegler (7) über eine Grafiksignalleitung (14) an die Messrecheneinheit (10),
c) Erzeugen eines kombinierten Anzeigesignals (BM) aus dem Messsignal (M) und dem Betriebsanzeigesignal (B), wobei das Messsignal (M) in dem kombinierten Anzeigesignal (BM) in einem dedizierten Anzeigebereich dargestellt wird,
d) Übertragen des kombinierten Anzeigesignals (BM) über die Messanzeigesignalleitung (15) an die Anzeigeeinheit (5).

10. Verfahren nach Anspruch 9, **dadurch gekennzeichnet, dass** das Betriebsanzeigesignal (B) in dem kombinierten Anzeigesignal (BM) in einem von dem dedizierten Anzeigebereich (16) unterschiedlichen Anzeigebereich (17) dargestellt wird, und/oder dass das Betriebsanzeigesignal (B) in dem kombinierten Anzeigesignal (BM) von dem dedizierten Anzeigebereich (16) überschrieben wird.

11. Verfahren nach einem der Ansprüche 7 bis 10, **dadurch gekennzeichnet, dass** das Messsignal (M) digital signiert wird.

12. Verfahren nach einem der Ansprüche 7 bis 11, **dadurch gekennzeichnet, dass** vor Schritt c) das Betriebsanzeigesignal (B) in ein von der Messrecheneinheit (10) vorgegebenes Grafiksignalformat umgewandelt wird.

13. Verfahren nach einem der Ansprüche 7 bis 11, **dadurch gekennzeichnet, dass** in Schritt c) aus dem Messsignal (M) ein Grafiksignal mit dem Grafiksignalformat des Betriebsanzeigesignals (B) erzeugt wird.

14. Verfahren nach Anspruch 13, **dadurch gekennzeichnet, dass** das aus dem Messsignal (M) erzeugte Grafiksignal dem Betriebsanzeigesignal (B) überlagert wird und dabei der dem dedizierten Anzeigebereich (16) entsprechende Bereich des Betriebsanzeigesignals (B) von dem aus dem Messsignal (M) erzeugten Grafiksignal überschrieben wird.

15. Verfahren nach einem der Ansprüche 7 bis 14, **dadurch gekennzeichnet, dass** in Schritt c) das kombinierte Anzeigesignal (BM) in einem durch die Anzeigeeinheit (5) vorgegebenen Grafiksignalformat erzeugt wird, und/oder dass vor Schritt d) das kombinierte Anzeigesignal (BM) in ein durch die Anzeigeeinheit (5) vorgegebenes Grafiksignalformat umgewandelt wird.
